# FASCICULE DE BREVET EUROPEEN

(11) **EP 0 891 908 B1**
(45) Date de publication et mention de la délivrance du brevet: **18.09.2002**
(21) Numéro de dépôt: 98401591.7
(22) Date de dépôt: 26.06.1998
(51) Int. Cl.: B60T 17/16

(54) **Dispositif de freinage pour un véhicule automobile comportant un frein de stationnement perfectionné**
Kraftfahrzeugbremsvorrichtung mit Feststellbremse
Motor vehicle brake device provided with a parking brake

(30) Priorité: 18.07.1997 FR 9709141
(43) Date de publication de la demande: 20.01.1999
(73) Titulaire: Renault V.I., 69800 St Priest (FR)
(72) Inventeur: Berthaud, Jean, 38790 Saint Georges d'Espéranche (FR)
(74) Mandataire: Palix, Stéphane

(56) Documents cités:
- DE-A- 3 732 303
- US-A- 4 007 815
- US-A- 5 048 656

## Description

L'invention concerne un dispositif de freinage pour un véhicule automobile comportant un frein de stationnement perfectionné.

L'invention concerne plus particulièrement un dispositif de freinage pour un véhicule automobile, comportant un organe mobile lié à une roue et un organe statique du véhicule, un frein de service muni d'un actionneur agissant sur l'organe statique pour provoquer le serrage des deux organes statique et mobile lorsqu'il est commandé d'une position de repos vers une position active par le conducteur du véhicule, et un dispositif de frein de stationnement qui provoque un serrage continu des organes statique et mobile, en dehors de toute action continue du conducteur, pour immobiliser le véhicule en stationnement.

Généralement, les actionneurs de dispositif de freinage de véhicule automobile sont constitués par des vérins à pression de fluide qui agissent sur l'organe statique du dispositif de freinage qui peut être par exemple constitué d'un segment de frein pour les freins à tambour ou d'un étrier pour les freins à disque.

Dans le cas des véhicules poids lourd, les vérins utilisés en tant qu'actionneur sont généralement du type pneumatique et ils ne peuvent donc fonctionner qu'en présence d'une pression de gaz suffisante dans un accumulateur pour pouvoir répondre à toute sollicitation du conducteur.

Or, l'alimentation de l'accumulateur en gaz sous pression ne se fait que lorsque le moteur du véhicule est en marche. Un frein de stationnement ne peut donc fonctionner selon un tel principe car une fuite, la plus légère soit-elle, dans le circuit pneumatique provoquerait une diminution progressive de la pression dans celui-ci et aboutirait immanquablement au desserrage du frein de stationnement.

Aussi, le frein de service doit être doublé par un frein de stationnement dont le fonctionnement est indépendant de la présence ou non de gaz sous pression dans le circuit pneumatique.

Par ailleurs, les dispositifs de frein de stationnement de véhicules poids lourd doivent répondre à un certain nombre de contraintes de nature réglementaire qui imposent par exemple de ne pouvoir déverrouiller le frein de stationnement que si le frein de service est fonctionnel, c'est-à-dire s'il existe une pression suffisante dans le circuit pneumatique de commande.

Pour répondre à ces problèmes, il a déjà été proposé des actionneurs de frein de type tandem. Un tel actionneur est par exemple décrit dans le document FR-A-2.173.583.

Un tel actionneur, constitué de deux vérins en série, comporte une première chambre pneumatique qui, lorsqu'elle est alimentée en air sous pression, provoque le déplacement vers l'avant d'un premier piston de service vers une position active dans laquelle il provoque le serrage du frein de service. Un ressort de rappel ramène le piston de service vers sa position arrière de repos lorsque la chambre du frein de service n'est plus alimentée en gaz sous pression.

Par ailleurs, l'actionneur comporte un second vérin de stationnement, agencé axialement à l'arrière du vérin de service, et dont un piston est sollicité par un ressort vers une position avancée dans laquelle il force le piston du frein de service vers sa position avancée de serrage. Le second vérin comporte lui aussi une chambre de pression qui, lorsqu'elle est alimentée en gaz sous pression, force le second piston du frein de stationnement en arrière, à l'encontre du ressort de stationnement, jusqu'à une position dans laquelle il n'est plus susceptible de coopérer avec le piston du frein de service.

Le fonctionnement d'un tel dispositif est sensiblement le suivant.

Lorsque le véhicule est en stationnement, les deux chambres de pression du vérin de service et du vérin de stationnement sont à la pression atmosphérique de sorte que, sous l'action du ressort de stationnement, le piston de stationnement pousse le piston de service vers sa position avancée de serrage pour immobiliser le véhicule. Lorsque le moteur du véhicule est mis en marche, une pompe fournit du gaz sous pression au circuit de freinage, gaz qui est alimenté directement dans la chambre de pression du frein de stationnement. Lorsque la pression est suffisante, le piston de stationnement a reculé vers une position escamotée à l'encontre du ressort de stationnement, permettant ainsi au piston de service de regagner une position de repos dans laquelle le serrage du frein est relâché.

Un tel actionneur permet donc d'immobiliser le véhicule lors de son stationnement et permet de répondre aux contraintes réglementaires.

Toutefois, comme on peut le voir dans le document FR-A-2.173.583, un tel actionneur est particulièrement encombrant puisque la longueur axiale du vérin de stationnement, qui s'ajoute à celle du frein de service, est presque deux fois supérieure à celle du frein de service.

En effet, l'effort de serrage du frein lors du stationnement est fourni par le seul ressort de stationnement, qui doit de plus lutter contre le ressort de rappel du piston de service, et qui est donc nécessairement d'une taille importante.

Par ailleurs, un tel actionneur est particulièrement complexe à réaliser, notamment pour résoudre les problèmes d'étanchéité entre les différents éléments mobiles indépendants qui le composent. Le document DE 37 32 303 décrit une solution correspondant au préambule de la revendication 1.

L'invention a donc pour objet de proposer une nouvelle conception d'un dispositif de freinage qui permette de réduire de manière importante l'encombrement et donc le poids de l'actionneur et qui permette également d'augmenter l'effort de serrage au niveau du frein lors du stationnement, ce qui augmente l'efficacité de celui-ci.

Dans ce but, l'invention propose un dispositif de freinage du type décrit précédemment, caractérisé en ce que le dispositif de frein de stationnement comporte un moyen commandé de blocage mécanique des deux organes fixe et mobile en position de serrage, et en ce que la mise en oeuvre du frein de stationnement comporte les étapes successives consistant à commander l'actionneur du frein de service pour provoquer le serrage des deux organes, puis à solliciter le moyen de blocage vers une position active pour maintenir les deux organes en position de serrage, et en ce que
- l'actionneur agit sur l'organe statique par l'intermédiaire d'un organe de transmission, et en ce que le moyen de blocage du frein de stationnement agit sur l'organe de transmission ;

Selon d'autres caractéristiques de l'invention :
- la mise en service du frein de stationnement comporte l'étape ultérieure de commander l'actionneur du frein de service vers sa position de repos lorsque le moyen de blocage est en position active ;
- le moyen de blocage reste en position active sans apport d'énergie ;
- l'organe de blocage est mobile selon une direction sensiblement perpendiculaire au déplacement de l'actionneur entre sa position de repos et sa position active ;
- l'actionneur agit sur un levier qui est articulé autour d'un axe et qui commande un mécanisme de serrage des deux organes, et le moyen de blocage comporte un doigt qui se déplace vers sa position active selon une direction parallèle à l'axe d'articulation du levier pour bloquer celui-ci dans une position dans laquelle il assure le serrage des deux organes statique et mobile du dispositif de freinage ;
- l'actionneur est réalisé sous la forme d'un vérin à pression de fluide qui est alimenté en fluide sous pression par deux circuits dont un premier est commandé par le conducteur au moyen d'une pédale de frein, et dont un second est commandé par un distributeur actionné par le conducteur ;
- le moyen de blocage est porté par un piston d'un second vérin à pression de fluide ;
- il comporte un distributeur pilote à quatre orifices et à quatre positions, en ce que les quatre orifices du distributeur sont reliés respectivement à une source de fluide sous pression, à une évacuation de fluide, à l'actionneur et à un circuit de commande de l'alimentation du moyen de blocage, et en ce que les quatre positions du distributeur correspondent aux étapes de mise en oeuvre du frein de stationnement.
- le circuit de commande de l'alimentation du vérin du moyen de blocage comporte un distributeur relais qui est commandé par le distributeur pilote et qui commande l'alimentation du vérin ; et
- le dispositif comporte une centrale électronique de commande de l'actionneur et du moyen de blocage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective illustrant un dispositif de freinage de véhicule automobile conforme aux enseignements de l'invention ;
- la figure 2 est une vue similaire à celle de la figure 1 dans laquelle le dispositif est représenté en position de freinage par le frein de service ;
- la figure 3 est une vue similaire à celle de la figure 1 dans laquelle le dispositif est représenté en position de stationnement ;
- les figures 4 à 8 sont des vues schématiques illustrant différents états d'un mode de réalisation d'un circuit de commande du dispositif des figures 1 à 3 ; et
- les figures 9 à 11 sont des vues similaires à celles des figures 1 à 3 illustrant de manière schématique un deuxième dispositif de freinage conforme aux enseignements de l'invention.

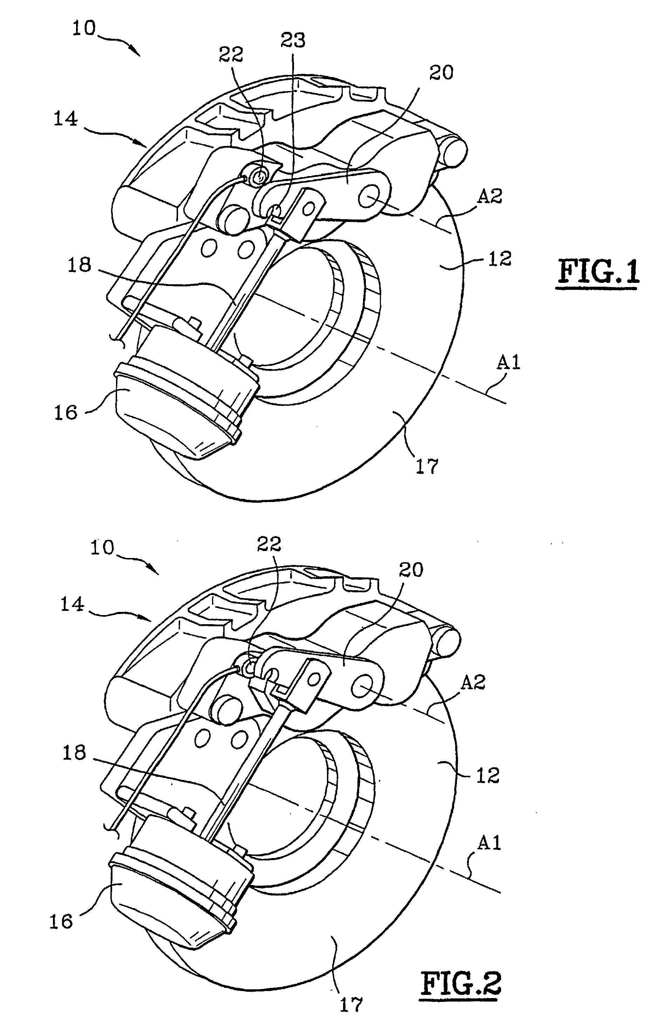

La figure 1 illustre de manière partielle et schématique un dispositif de freinage de véhicule automobile comportant un frein à disque 10.

Le frein 10 comporte un disque 12 d'axe A1 qui est solidaire par exemple d'une roue du véhicule ou d'un arbre de transmission de celui-ci. Un étrier 14, qui est solidaire d'un organe de suspension de la roue ou du châssis du véhicule, chevauche le disque 12 sur une partie de sa circonférence. L'étrier 14 porte des patins de friction (non représentés) constitués d'un support et d'une garniture de friction qui, sous l'effet d'un dispositif d'actionnement de l'étrier 14, sont destinés à être serrés axialement l'un en direction de l'autre contre deux faces annulaires opposées 17 du disque 12 pour ralentir la rotation relative du disque par rapport à l'étrier et éventuellement immobiliser le disque 12 en rotation autour de son axe A1.

Dans l'exemple de réalisation qui est représenté sur les figures 1 et 2, le dispositif d'actionnement qui provoque le serrage des patins de friction comporte un actionneur 16 réalisé sous la forme d'un vérin à pression de fluide dont la tige de piston 18 provoque la rotation, autour d'un axe A2 parallèle à l'axe A1 du disque 12, d'un levier 20 qui, par exemple par un dispositif à rampe (non représenté), provoque le serrage axial des patins de friction.

Le fluide utilisé pour l'actionneur peut être aussi bien un gaz sous pression qu'un liquide.

A la figure 1, le dispositif d'actionnement est représenté dans une position dans laquelle l'actionneur 16 est en position de repos et ne provoque pas le serrage des patins de friction.

A la figure 2, le dispositif est illustré en position de freinage, par exemple lorsque le conducteur souhaite ralentir le véhicule. L'actionneur 16 est alors alimenté en fluide sous pression de telle sorte que sa tige de piston 18 provoque la rotation du levier 20 vers une position dans laquelle il provoque le serrage des patins de friction sur le disque de frein 12.

Conformément aux enseignements de l'invention, le dispositif de freinage selon l'invention comporte aussi un moyen de blocage commandé qui permet de maintenir les patins de friction serrés contre le disque de frein 12, même lorsque l'actionneur 16 n'est plus alimenté en fluide sous pression.

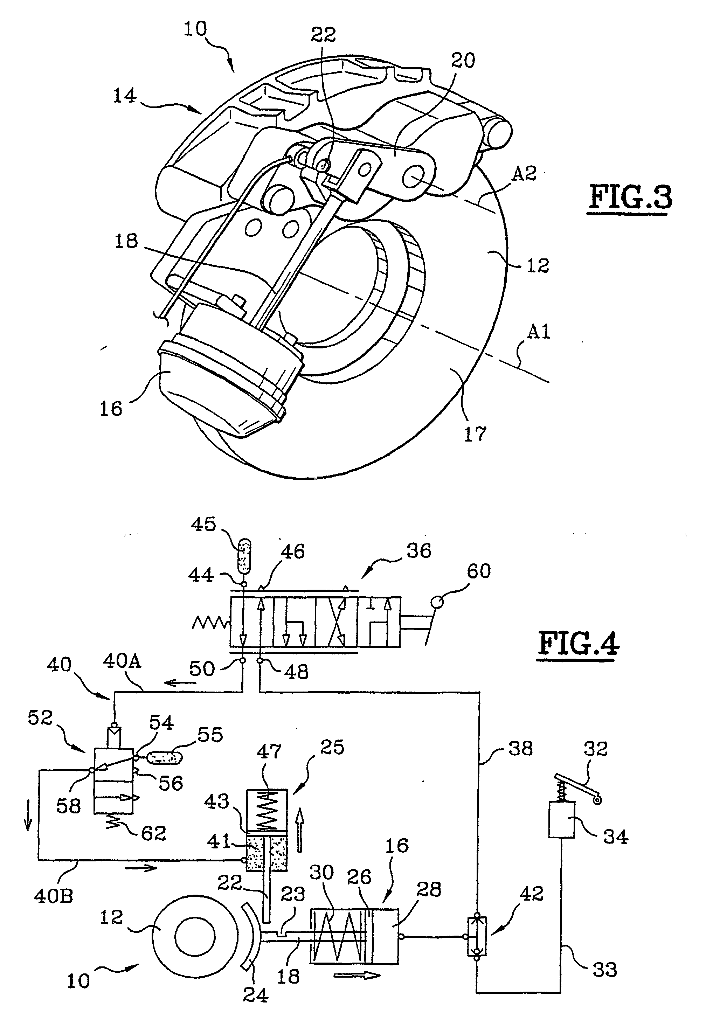

Dans l'exemple de réalisation représenté sur les figures 1 à 3, le moyen de blocage, réalisé sous la forme d'un doigt de blocage 22, est monté mobile axialement sur l'étrier 14, selon une direction parallèle à l'axe A2 d'articulation du levier 20, entre une position escamotée de repos, représentée aux figures 1 et 2, et une position active de blocage, représentée à la figure 3, dans laquelle il immobilise le levier 20 dans une position dans laquelle il provoque le serrage des patins de friction sur le disque 12. A cet effet, le doigt de blocage 22 est reçu dans une encoche 23 formée en vis-à-vis dans un bord du levier 20.

Le doigt de blocage 22 peut être commandé par tout moyen approprié et notamment par un vérin pneumatique, un vérin hydraulique ou par un moyen d'actionnement électromécanique.

Avantageusement, le doigt de blocage 22 est mobile suivant une direction qui est perpendiculaire à la direction de pivotement du levier 20 de sorte que, quel que soit l'effort appliqué par le levier 20 sur le doigt 22, le doigt n'a pas tendance à être ramené vers sa position de repos par l'action du levier 22. Il n'est donc pas besoin de prévoir des moyens de maintien du doigt de blocage en position de blocage qui soient susceptibles de résister à un effort particulièrement important.

On a représenté de manière schématique sur les figures 4 à 8 un circuit de commande du dispositif de freinage conforme aux enseignements de l'invention qui permet de commander à la fois le frein de service et le doigt de blocage tout en réalisant les fonctions de sécurité imposées par la réglementation.

Comme on peut le voir sur la figure 4, le frein 10 est représenté de manière symbolique sous la forme d'un disque 12 constituant un organe mobile lié à la roue et d'un patin de friction 24 relié directement à la tige 18 de l'actionneur 16 qui provoque le serrage du patin 24 sur le disque 12. L'actionneur 16 est un vérin à pression de fluide dans lequel un piston 26 délimite une chambre de pression 28 à volume variable.

Le piston 26 est sollicité par un ressort 30 vers une position de repos, représentée à la figure 4, dans laquelle le volume de la chambre 28 est minimal. Le patin de friction 24 est alors dans une position de repos, de telle sorte que le disque de frein 12 est libre en rotation autour de son axe.

De manière connue, l'actionneur 16 est susceptible d'être alimenté en fluide sous pression par le biais d'un bloc d'alimentation 34 qui est commandé par une pédale de frein 32 sur laquelle le conducteur du véhicule agit lorsqu'il veut ralentir ou immobiliser son véhicule.

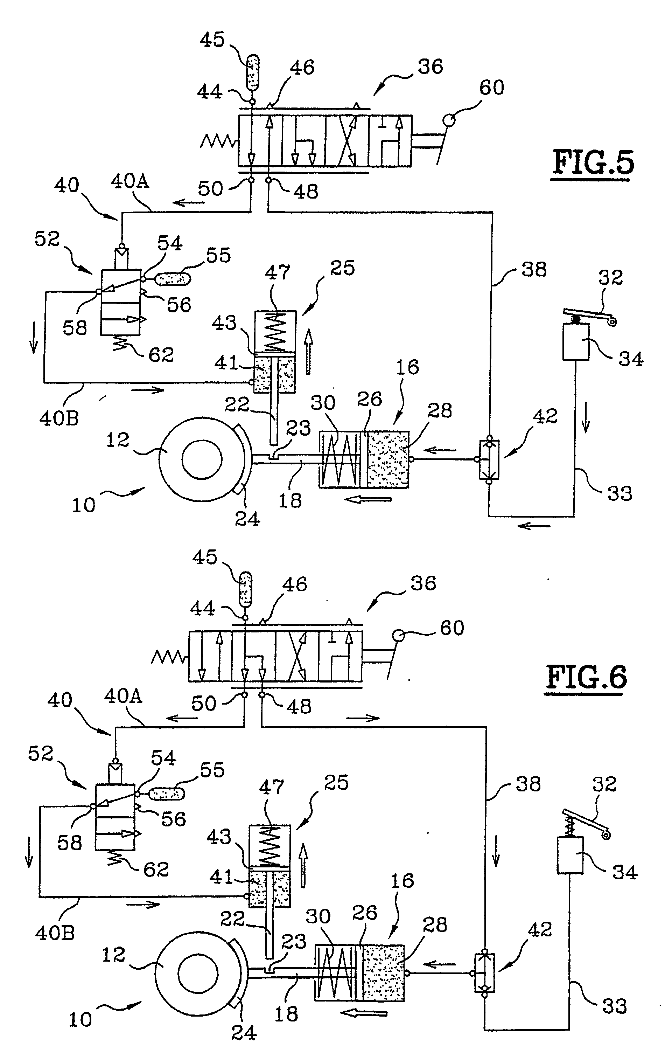

Comme on peut le voir sur la figure 5, lorsque la pédale 32 est amenée vers une position de freinage, le bloc 34, par ailleurs connu, provoque l'alimentation de la chambre de pression 28 en fluide sous pression, ce qui provoque le déplacement du piston 26 vers une position active, à l'encontre du ressort 30, dans laquelle le patin de friction 24 est au contact du disque 12 pour en provoquer la rotation.

Conformément aux enseignements de l'invention, il est par ailleurs prévu un moyen de blocage du patin de friction 24 dans cette position.

En effet, un doigt de blocage 22 qui est mobile sous l'effet d'un second vérin 25 est susceptible de coopérer, en l'espèce avec une encoche 23 de la tige de piston 18, pour immobiliser le patin de friction 24 et le piston 16 en position active de freinage.

Ce moyen de blocage est commandé par un circuit de commande de frein de stationnement qui comporte notamment un distributeur pilote 36 susceptible de provoquer l'alimentation d'une part de la chambre de pression 28 de l'actionneur principal 16 du frein de service, par le biais d'une canalisation 38, et d'autre part de commander indirectement l'alimentation de la chambre de pression 41 du second vérin 25 de commande du moyen de blocage 22, par l'intermédiaire d'un circuit 40.

L'actionneur principal 16 est donc destiné à être alimenté soit par le distributeur 36, soit par le bloc principal de commande 34 de sorte que les canalisations respectives 38, 33 sont branchées sur un sélecteur de circuit 42 relié à la chambre de pression 28 de l'actionneur 16. Le sélecteur de circuit 42 permet, lorsque l'une des canalisations 33, 38 est alimentée en fluide sous pression, d'isoler, par rapport à la chambre de pression 28, celle des canalisations 38, 33 qui n'est pas alimentée.

Le distributeur pilote 36 du frein de stationnement est un distributeur à quatre positions et à quatre orifices.

Un premier orifice 44 est relié à une source de fluide sous pression 45, un second 46 est relié à une évacuation de fluide, le troisième 48 est relié à la canalisation 38 d'alimentation de l'actionneur principal 16 et le quatrième 50 est relié à une canalisation 40A de commande d'un distributeur relais 52 d'alimentation du vérin 25 du doigt de blocage 22.

Le distributeur relais 52 est interposé entre la canalisation 40A et une canalisation d'alimentation 40B du vérin 25 du doigt de blocage 22. Le distributeur relais 52 permet notamment de réduire le temps de réponse du circuit de commande du vérin 25.

Toutefois, dans une version simplifiée de réalisation de l'invention, le circuit d'alimentation du vérin 25 peut être constitué d'une simple canalisation reliant directement le quatrième orifice 50 du distributeur pilote 36 à la chambre de pression 41 du vérin 25.

Le distributeur 52 est du type à trois orifices et à deux positions, les déplacements du distributeur étant commandés par le distributeur pilote en fonction de la présence ou non de fluide sous pression dans la canalisation 40A.

Un premier orifice 54 du distributeur relais 52 est relié à une source d'alimentation en fluide sous pression 55, qui peut être ou non la même que celle 45 reliée au premier orifice 44 du distributeur pilote 36. Le second orifice 56 est relié à un dispositif d'évacuation du fluide sous pression et le troisième orifice 58 est relié à la canalisation d'alimentation 40B du second vérin 25.

Le distributeur relais 52 provoque l'alimentation du vérin 25, par l'intermédiaire de la canalisation 40B, seulement si le distributeur pilote 36 met en communication la canalisation 40A avec la source de fluide sous pression 45.

Le distributeur piloté 36 est par exemple commandé manuellement à l'aide d'un levier 60 par le conducteur lorsqu'il désire activer ou désactiver le frein du stationnement du véhicule. Le levier 60 provoque successivement le passage du distributeur 36 par ses quatre positions.

Dans une première position du distributeur pilote 36, qui est représenté à la figure 4 et vers laquelle il est rappelé élastiquement, la canalisation d'alimentation 38 de l'actionneur principal 16 est reliée à l'évacuation de fluide 46 tandis que la canalisation 40B d'alimentation du second vérin 25 est reliée à l'alimentation de fluide sous pression 55.

Dans cette première position, la pression dans la canalisation 40A sollicite le distributeur relais 52, à l'encontre d'un ressort de rappel 62, vers une position dans laquelle de la canalisation 40B est alimentée par la source de pression auxiliaire 55 reliée à l'orifice 54 de sorte que la chambre de pression 41 du second vérin 25 provoque le déplacement d'un piston 43, à l'encontre d'un ressort de rappel 47, vers une position dans laquelle le doigt de blocage 22 est escamoté.

Par ailleurs, en l'absence de pression dans la canalisation 38, la chambre de pression 28 de l'actionneur principal 16 est susceptible d'être alimentée ou non en pression par le bloc principal d'alimentation 34 en fonction de l'action du conducteur sur la pédale 32, ainsi que cela est représenté sur les figures 4 et 5. Cette position correspond à l'utilisation du dispositif de freinage comme frein de service lorsque le véhicule roule.

Dans une deuxième position du distributeur pilote 36 représentée à la figure 6, les deux orifices 48 et 50 auxquels sont reliées les canalisations 38 et 40A sont mis en communication par le distributeur 36 avec la source de pression 45 de sorte que le piston 26 de l'actionneur principal 16 est sollicité vers sa position active dans laquelle il provoque le serrage du frein 10, tandis que le doigt de blocage 22 reste en position escamotée de repos.

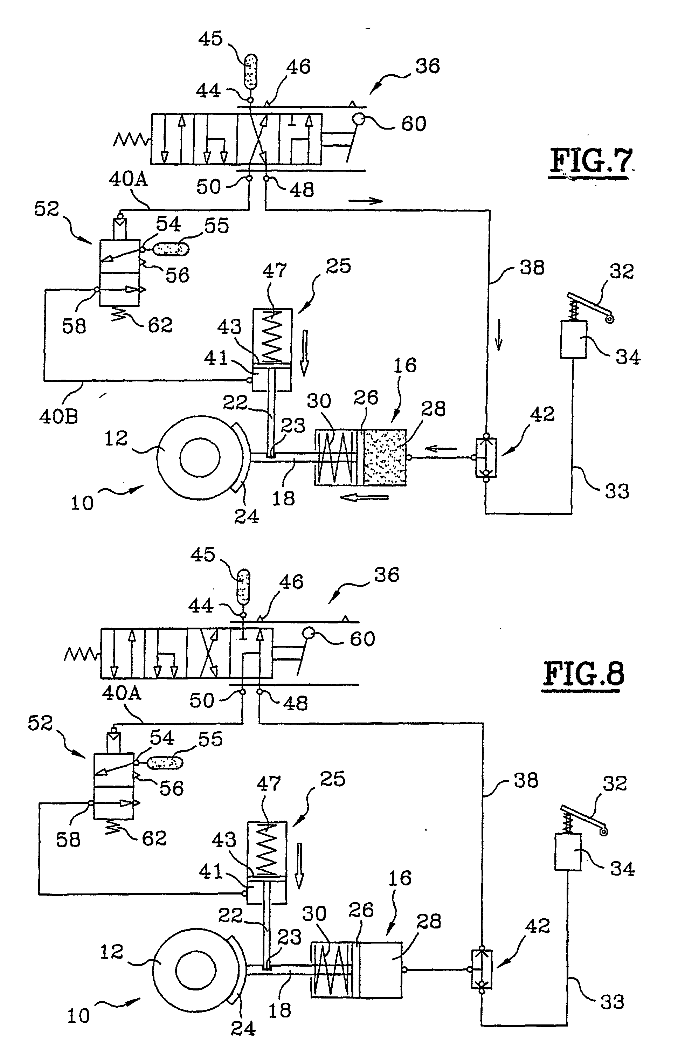

Dans la troisième position du distributeur 36 qui est représentée à la figure 7, la chambre 28 de l'actionneur 16 reste alimentée en fluide sous pression par la canalisation 38 reliée au distributeur 36, tandis que l'orifice 50 auquel est reliée la canalisation 40a de commande du second vérin 25 est mise en communication avec l'orifice 46 du distributeur 36 relié à l'évacuation de fluide sous pression. Du fait de l'absence de pression dans cette canalisation 40A, le distributeur relais 52 est ramené par le ressort 62 vers une seconde position dans laquelle la canalisation 40A d'alimentation du vérin 25 est mise en communication avec l'évacuation de fluide 56.

De la sorte, la chambre de pression 41 du second vérin 25 peut se vider sous l'effet du déplacement du piston 43 provoqué par le ressort de rappel 47.

Le doigt de blocage 22 s'engage alors dans un logement 23 prévu à cet effet sur la tige de piston 18 de l'actionneur principal 16, ce qui bloque le frein en position de freinage.

Alors, ainsi que cela est représenté à la figure 8, il est possible de d'interrompre l'alimentation de la chambre 28 de l'actionneur principal 16 en mettant en communication la canalisation 38 avec l'évacuation 46 du distributeur 36 sans que le piston 26 ne revienne vers sa position de repos. Le distributeur pilote 36 est alors dans sa quatrième position correspondant à l'utilisation du dispositif de freinage en tant que frein de stationnement.

Le doigt de blocage 22 est maintenu en position de blocage par le ressort 47 du second vérin 25. Celui-ci n'a toutefois pas besoin d'être particulièrement raide du fait que l'effort de serrage qui est transmis par le frein 10 à la tige de piston 18 de l'actionneur 16 est dirigé sensiblement suivant une direction perpendiculaire au déplacement du piston 43 du vérin 25.

Le dispositif de freinage selon l'invention est donc particulièrement avantageux et économique en ce qu'il permet d'obtenir une force de serrage très importante pour le stationnement du véhicule sans recourir à un actionneur particulièrement puissant.

En effet, l'effort de serrage est fourni par l'actionneur principal 16 du frein de service au cours d'une première étape de mise en action du frein de stationnement. Le dispositif d'actionnement 25 nécessaire au déplacement du doigt de blocage 22 peut être d'une faible puissance.

L'invention est de préférence mise en oeuvre dans le cadre d'un frein 10 qui comporte un mécanisme automatique de rattrapage de l'usure des plaquettes afin que la force de freinage pour le stationnement soit constante au cours du temps.

Lorsque l'utilisateur souhaite mettre hors de service le frein de stationnement, il déplace le distributeur pilote 36 selon la direction inverse de celle qui vient d'être décrite pour réaliser les étapes dans l'ordre inverse. De préférence, il est prévu un moyen de blocage du levier 60 de commande du frein de stationnement qui n'autorise la mise en service de celui-ci que lorsque la pression de fluide disponible pour le frein de service est suffisamment importante.

L'invention peut également être mise en oeuvre avec un circuit de commande du vérin 25 qui soit de nature essentiellement électronique et non pas de nature hydraulique ou pneumatique.

Ainsi, le distributeur relais peut être commandé par une unité centrale de commande en fonction de paramètres tels que la vitesse des roues du véhicule et la pression de fluide dans les accumulateurs 45, 55. D'autres paramètres peuvent aussi être pris en compte pour autoriser la mise hors service du frein de stationnement, tels que l'identification du conducteur en vue d'utiliser le système de freinage comme un moyen antivol complémentaire.

Bien entendu, l'invention peut être mise en oeuvre dans des dispositifs de freinage qui comportent d'autres moyens d'actionnement que ceux décrits aux figures 1 à 3.

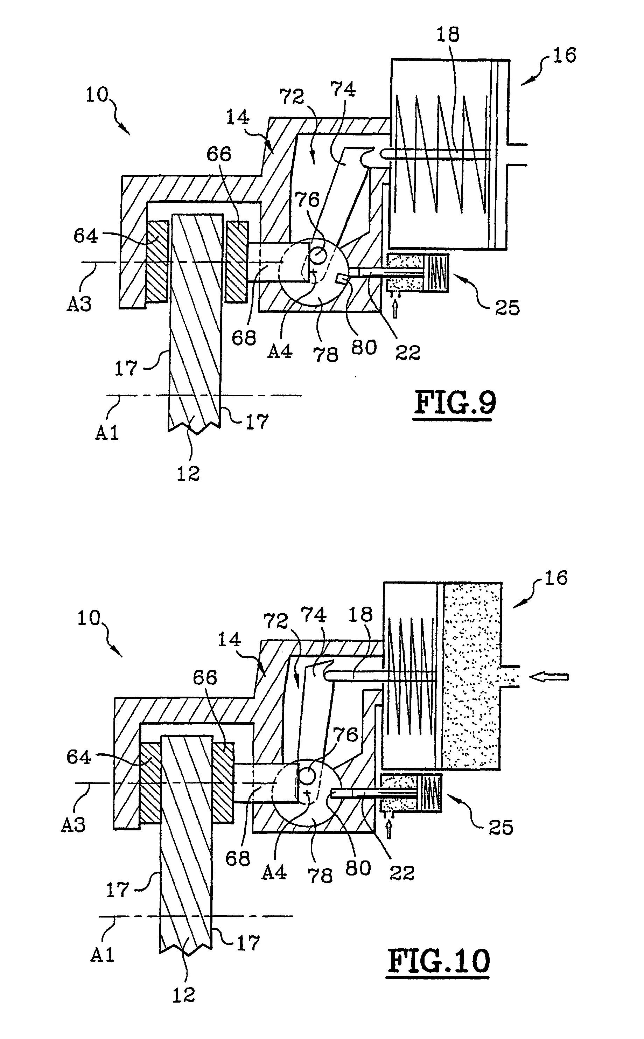

Une telle variante de réalisation est par exemple représentée aux figures 9 à 11 dans lesquelles des éléments identiques ou similaires à ceux décrits précédemment sont désignés par les mêmes chiffres de référence.

Ce second mode de réalisation présente des différences de structure mais son fonctionnement est identique à celui qui a été décrit précédemment.

Le frein 10 qui est représenté sur ces figures est du type dans lequel le disque de frein 12 est mobile axialement selon son axe 61 pour être serré entre une garniture fixe 64, solidaire de l'étrier 14, et une garniture mobile 66 montée à l'avant d'un support 68 qui coulisse d'arrière en avant dans l'étrier 14 selon un axe A3 parallèle à l'axe A1 entre une position libre représentée à la figure 9 et une position de freinage représentée à la figure 10 sous l'effet d'un vérin d'actionnement 16.

Le vérin 16 n'agit pas directement sur la garniture mobile 66 mais au contraire sur un levier à excentrique 72 qui est articulé sur l'étrier 14 autour d'un axe A4 perpendiculaire aux axes A1 et A4.

Le levier 72 comporte essentiellement un bras 74 d'orientation radiale, qui s'étend depuis un corps central cylindrique 78 d'axe A4, et sur l'extrémité libre duquel la tige 18 du vérin 16 est susceptible d'agir parallèlement à l'axe A1 pour faire pivoter le levier 72 autour de son axe A4 d'une position de repos représentée à la figure 9 à une position de freinage représentée à la figure 10.

Le levier 72 comporte aussi un ergot 76 qui s'étend depuis une face latérale du corps cylindrique 78 du levier 72 selon un axe A5 parallèle à l'axe A4, à proximité de l'axe A4 mais décalé de celui-ci. L'ergot 76 est destiné à prendre appui contre une face arrière du support 68 de manière à ce que, lorsque le levier 72 pivote vers sa position de freinage, c'est-à-dire dans le sens anti-horaire en regardant les figures 9 à 11, le support 68 est forcé vers l'avant par l'ergot 76 vers sa position de freinage.

Grâce à l'effet démultiplicateur du levier 72, on obtient un serrage très important du disque 12 sans recourir à un vérin trop puissant.

Comme on peut le voir sur les figures, le corps cylindrique 78 comporte une gâche 80 qui débouche radialement dans sa surface extérieure 82 et qui est destinée à recevoir, lorsque le levier 72 est en position de freinage, l'extrémité libre d'un doigt de verrouillage 22 qui est mobile selon une direction parallèle à l'axe A1.

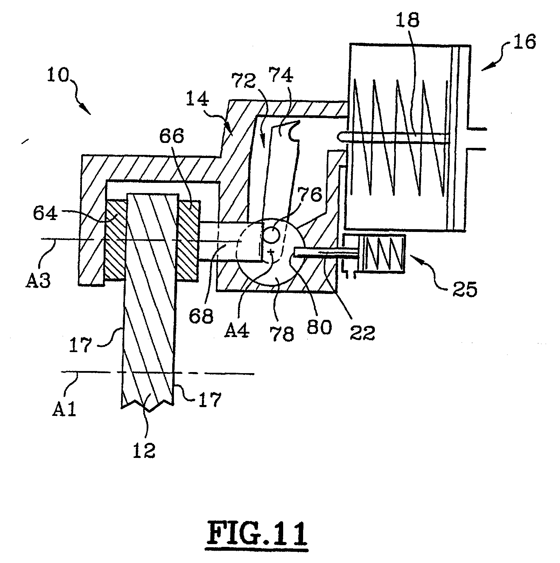

Lorsque le-doigt de verrouillage 22 est engagé dans la gâche 80 ainsi que cela est représenté la figure 11, le levier 72 est bloqué en position de verrouillage et il est possible de supprimer l'alimentation du vérin 16.

Le frein 10 joue ainsi le rôle de frein de stationnement.

## Revendications

1. Dispositif de freinage pour un véhicule automobile, comportant un organe mobile (12) lié à une roue et un organe statique (24) du véhicule, un frein de service muni d'un actionneur (16) agissant sur l'organe statique (24) pour provoquer le serrage des deux organes statique (24) et mobile (12) lorsqu'il est commandé d'une position de repos vers une position active par le conducteur du véhicule, et un dispositif de frein de stationnement qui provoque un serrage continu des organes statique (24) et mobile (12), en dehors de toute action continue du conducteur, pour immobiliser le véhicule en stationnement, dans lequel le dispositif de frein de stationnement comporte un moyen commandé (22) de blocage mécanique des deux organes statique (24) et mobile (12) en position de serrage, et en ce que la mise en oeuvre du frein de stationnement comporte les étapes successives consistant à commander l'actionneur (16) du frein de service pour provoquer le serrage des deux organes (24, 12), puis à solliciter le moyen de blocage (22) vers une position active pour maintenir les deux organes (24, 12) en position de serrage, **caractérisé en ce que** l'actionneur (16) agit sur l'organe statique (24) par l'intermédiaire d'un organe de transmission (20), et **en ce que** le moyen de blocage (22) du frein de stationnement agit sur l'organe de transmission (20).

2. Dispositif selon la revendication 1, **caractérisé en ce que** la mise en service du frein de stationnement comporte l'étape ultérieure de commander l'actionneur (16) du frein de service vers sa position de repos lorsque le moyen de blocage (22) est en position active.

3. Dispositif selon l'une quelconque des revendications précédentes, **caractérisé en ce que** le moyen de blocage (22) reste en position active sans apport d'énergie.

4. Dispositif selon la revendication 3, **caractérisé en ce que** l'organe de blocage (22) est mobile selon une direction sensiblement perpendiculaire au déplacement de l'actionneur (16) entre sa position de repos et sa position active.

5. Dispositif selon la revendication 4, **caractérisé en ce que** l'actionneur (16) agit sur un levier qui est articulé autour d'un axe (A2) et qui commande un mécanisme de serrage des deux organes (24, 12), et **en ce que** le moyen de blocage comporte un doigt (22) qui se déplace vers sa position active selon une direction parallèle à l'axe d'articulation (A2) du levier (20) pour bloquer celui-ci dans une position dans laquelle il assure le serrage des deux organes statique (24) et mobile (12) du dispositif de freinage.

6. Dispositif selon l'une quelconque des revendications précédentes, **caractérisé en ce que** l'actionneur (16) est réalisé sous la forme d'un vérin à pression de fluide qui est alimenté en fluide sous pression par deux circuits dont un premier est commandé par le conducteur au moyen d'une pédale de frein, et dont un second est commandé par un distributeur (36) actionné par le conducteur.

7. Dispositif selon la revendication 6, **caractérisé en ce que** le moyen de blocage (22) est porté par un piston (43) d'un second vérin à pression de fluide (25).

8. Dispositif selon la revendication 7, **caractérisé en ce qu'**il comporte un distributeur pilote (36) à quatre orifices et à quatre positions, **en ce que** les quatre orifices du distributeur (36) sont reliés respectivement à une source de fluide sous pression (45), à une évacuation de fluide (46), à l'actionneur (16) et à un circuit de commande (40) de l'alimentation du moyen de blocage (22), et **en ce que** les quatre positions du distributeur (36) correspondent aux étapes de mise en oeuvre du frein de stationnement.

9. Dispositif selon la revendication 8, **caractérisé en ce que** le circuit de commande (40) de l'alimentation du vérin (25) du moyen de blocage (22) comporte un distributeur relais (52) qui est commandé par le distributeur pilote (36) et qui commande l'alimentation du vérin (25).

10. Dispositif selon l'une quelconque des revendications 1 à 5, **caractérisé en ce qu'**il comporte une centrale électronique de commande de l'actionneur (16) et du moyen de blocage (22).

## Patentansprüche

1. Bremsvorrichtung für ein Kraftfahrzeug, mit einem beweglichen Bauteil (12), das mit einem Rad verbunden ist und mit einem statischen Bauteil (24) am Fahrzeug, mit einer Betriebsbremse, die ein Betätigungsteil (16) aufweist, das auf das statische Bauteil (24) einwirkt um einen Klemmeingriff des statischen Bauteils (12) mit dem beweglichen Bauteil (24) zu bewirken, wenn es durch den Fahrer des Fahrzeuges von einer Ruhestellung in eine aktive Stellung überführt wird und mit einer Feststellbremse, die einen kontinuierlichen Klemmeingriff der statischen und beweglichen Bauteile (24, 12) miteinander bewirkt ohne jeglicher andauernder Aktion des Fahrers um das Fahrzeug während des Parkens festzuhalten, wobei die Feststellbremse eine Anordnung (22) zum mechanischen Blockieren der beiden statischen und beweglichen Bauteile (24, 12) in ihrer Klemmstellung aufweist und dass die Aktivierung der Feststellbremse die aufeinander folgenden Schritte aufweist des Ansteuerns des Betätigungsteils (16) der Betriebsbremse um den Klemmeingriff der beiden Bauteile (24, 12) miteinander zu bewirken, der Beaufschlagung der Anordnung (22) zum Blockieren in Richtung einer aktiven Stellung, in der die beiden Bauteile(24, 12) im Klemmeingriff miteinander sind, **dadurch gekennzeichnet, dass** das Betätigungsteil (16) auf das statische Bauteil (24) über ein Übertragungsteil (20) einwirkt und dass die Anordnung (22) zum Blockieren der Feststellbremse auf das Übertragungsteil (20) einwirkt.

2. Vorrichtung nach Anspruch 1, **dadurch gekennzeichnet, dass** die Aktivierung der Feststellbremse den späteren Schritt der Ansteuerung des Betätigungsteils (16) der Betriebsbremse in Richtung seiner Ruhestellung aufweist, wenn die Anordnung (22) zum Blockieren in ihrer aktiven Stellung ist.

3. Vorrichtung nach einem der vorhergehenden Ansprüche, **dadurch gekennzeichnet, dass** die Anordnung (22) zum Blockieren in ihrer aktiven Stellung ohne Energiezufuhr verbleibt.

4. Vorrichtung nach Anspruch 3, **dadurch gekennzeichnet, dass** die Anordnung (22) zum Blockieren entlang einer Richtung beweglich ist, die im wesentlichen senkrecht verläuft zur Verschieberichtung des Betätigungsteils (16) zwischen seiner Ruhestellung und seiner aktiven Stellung.

5. Vorrichtung nach Anspruch 4, **dadurch gekennzeichnet, dass** das Betätigungsteil (16) auf einen Hebel einwirkt, der an einer Achse (A2) angelenkt ist und der auf einen Klemmmechanismus für die beiden Bauteile (24, 12) einwirkt und dass die Anordnung zum Blockieren einen Stift (22) aufweist, der in Richtung seiner aktiven Stellung entlang einer Richtung parallel zur Gelenkachse (A2) des Hebels (20) verschiebbar ist um letzteren in einer Stellung zu blockieren, in der er den Klemmeingriff des statischen Bauteils (24) mit dem beweglichen Bauteil (12) gewährleistet.

6. Vorrichtung nach einem der vorhergehenden Ansprüche, **dadurch gekennzeichnet, dass** das Betätigungsteil (16) als Druckfluidzylinder ausgebildet ist, der mit einem unter Druck stehenden Fluid beaufschlagt wird mittels zweier Kreisläufe, wobei der erste vom Fahrer über das Bremspedal gesteuert wird und der zweite vom Verteiler (36) gesteuert wird, der wiederum vom Fahrer betätigt wird.

7. Vorrichtung nach Anspruch 6, **dadurch gekennzeichnet, dass** die Anordnung (22) zum Blockieren vom Kolben (43) eines zweiten Druckfluidzylinders (25) getragen wird.

8. Vorrichtung nach Anspruch 7, **dadurch gekennzeichnet, dass** sie einen Steuerverteiler (36) aufweist mit vier Öffnungen und vier Stellungen, dass die vier Öffnungen des Verteilers (36) mit einem unter Druck stehenden Vorratsbehälter (45) für das Fluid, mit einer Abfuhrleitung (46) für das Fluid, mit dem Betätigungsteil (16), bzw. mit einem Steuerkreislauf (40) zur Versorgung der Anordnung (22) zum Blockieren verbunden sind und dass die vier Stellungen des Verteilers (36) den Schritten zur Betätigung der Feststellbremse entsprechen.

9. Vorrichtung nach Anspruch 8, **dadurch gekennzeichnet, dass** der Steuerkreislauf (40) zur Versorgung des Druckzylinders (25) der Anordnung (22) zum Blockieren einen Zwischenverteiler (52) aufweist, der vom Steuerverteiler (36) gesteuert wird und der die Versorgung des Druckzylinders (25) steuert.

10. Vorrichtung nach einem der Ansprüche 1 bis 5, **dadurch gekennzeichnet, dass** sie eine elektronische Steuerzentrale für das Betätigungsteil (16) und die Anordnung (22) zum Blockieren aufweist.

## Claims

1. Motor vehicle braking device comprising a moving member (12) connected to a wheel and a static member (24) of the vehicle, a service brake equipped with an actuator (16) acting on the static member (24) to cause the two, static (24) and moving (12), members to be squeezed together when it is made to move from a position of rest to an active position by the driver of the vehicle, and a parking brake device which causes the static (24) and moving (12) members to be squeezed together constantly outside of any continuous action of the driver, so as to immobilize the vehicle when parked, in which device the parking brake device comprises a controlled means (22) of mechanically locking the two, static (24) and moving (12), members in the squeezed-together position, and in that [sic] operation of the parking brake involves the successive steps which consist in controlling the actuator (16) of the service brake so as to squeeze together the two members (24, 12), then in urging the locking means (22) into an active position in order to keep the two members (24, 12) squeezed together, **characterized in that** the actuator (16) acts on the static member (24) via a transmission member (20), and **in that** the means (22) of locking the parking brake acts on the transmission member (20).

2. Device according to Claim 1, **characterized in that** use of the parking brake involves the subsequent step of causing the actuator (16) of the service brake to move to its position of rest when the locking means (22) is in the active position.

3. Device according to either one of the preceding claims, **characterized in that** the locking means (22) remains in the active position without any energy being supplied.

4. Device according to Claim 3, **characterized in that** the locking member (22) can move in a direction roughly perpendicular to the movement of the actuator (16) between its position of rest and its active position.

5. Device according to Claim 4, **characterized in that** the actuator (16) acts on a lever which is articulated about an axis (A2) and which controls a mechanism for squeezing the two members (24, 12) together, and **in that** the locking means comprises a finger (22) which moves towards its active position in a direction parallel to the axis of articulation (A2) of the lever (20) so as to lock the latter in a position in which it squeezes the two, static (24) and moving (12), members of the braking device together.

6. Device according to any one of the preceding claims, **characterized in that** the actuator (16) is produced in the form of a fluid pressure ram which is supplied with fluid under pressure on two circuits, a first of which is controlled by the driver via a brake pedal and a second of which is controlled by a distributor (36) actuated by the driver.

7. Device according to Claim 6, **characterized in that** the locking means (22) is carried by a piston (43) of a second fluid pressure ram (25).

8. Device according to Claim 7, **characterized in that** it comprises a pilot distributor (36) with four ports and four positions, **in that** the four ports of the distributor (36) are connected respectively to a source of fluid under pressure (45), to a fluid discharge (46), to the actuator (16) and to a circuit (40) controlling the supply to the locking means (22), and **in that** the four positions of the distributor (36) correspond to the stages of operation of the parking brake.

9. Device according to Claim 8, **characterized in that** the circuit (40) controlling the supply to the ram (25) of the locking means (22) comprises a relay distributor (52) which is controlled by the pilot distributor (36) and which controls the supply to the ram (25).

10. Device according to any one of Claims 1 to 5, **characterized in that** it comprises an electronic unit for controlling the actuator (16) and the locking means (22).
